# EUROPEAN PATENT SPECIFICATION

(11) **EP 0 459 808 B1**
(45) Date of publication and mention of the grant of the patent: **05.03.1997**
(21) Application number: 91304906.0
(22) Date of filing: 30.05.1991
(51) Int. Cl.: G06K 11/12

(54) **Digitizers**
Digitalumsetzer
Convertisseur numérique

(30) Priority: 31.05.1990 GB 9012167
(43) Date of publication of application: 04.12.1991
(73) Proprietor: Personal Biometric Encoders Limited, London SW15 3NT (GB)
(72) Inventor: White, George, Chelmsford, Essex CM2 9PS (GB); Parsons, Nicholas John, Layer-de-la-Haye, Colchester CO2 0EL (GB); Kimber, Paul Kevin, Bishops Stortford, Hertfordshire (GB)
(74) Representative: Valentine, Francis Anthony Brinsley

(56) References cited:
- WO-A-87/01574
- US-A- 4 207 444

## Description

This invention concerns digitizers of the kind comprising a matrix of sensitive areas or cells each responsive to an applied stimulus to provide an output indicative of the position within the matrix at which the stimulus was applied.

A well known form of digitizers is that used in computer related graphics. This digitizer comprises a pad having a "drawing" area formed of a matrix of pressure sensitive cells responsive to the applied pressure of a stylus point drawn across the surface of the pad. The digitizer is used for inputting freehand drawing, manuscript or like graphics materials to a computer. The matrix may be formed of a plurality of parallel first conductors with orthogonally extending second conductors arranged to make contact with the first conductors on the application of pressure to a support for the second conductors. One method of determining the absolute x, y coordinates of the point of applied pressure is to apply a potential to each first conductor in turn whilst measuring the presence or absence of a potential on each of the second conductors. This "scanning" of the conductors takes a finite time and, in consequence, there is usually a maximum speed at which the stylus can be moved across the pad for faithful corresponding reproduction on the screen of a display unit of the computer. Further, such a digitizer cannot cope with simultaneously applied pressure at a plurality of points on the pad. It merely "sees" them, if at all, as a plurality of sequentially applied pressures (due to the finite scan) and may attempt to connect the points as in a drawing.

Further, in a known digitizer of this kind (sometimes called a "graphics tablet"), the applied pressure from the stylus point is relatively high.

Other digitizers are known which can utilise light responsive or electrostatic or electrodynamic responsive means to identify the location correspondingly so stimulated.

Fingerprints provide a near-infallible method of distinguishing between individuals. The degree of certainty depends upon the level of sophistication of comparison techniques that are used. For the purpose of indentity confirmation in connection with credit card usage, point-of-sale detecting systems and many other applications, comparison of a relatively small number of points will suffice. For more rigorous applications, a greater number of points must be considered.

The epidermal ridges which form the loops, arches whorls of fingerprints are less than 0.5 mm in width, the spacing of such ridges being of the same order. Despite the fact that some present day digitizers claim a resolution of this order, their pressure differential sensitivity would not enable them to be used for fingerprint verification in addition to their inability to distinguish between simultaneously applied plural pressure points.

From WO 87/01574 a walkway for measuring the forces on the soles of the feet of someone walking across the walkway is known. The walkway is formed of three layers. The upper and lower layers each have conductive paths, each path being parallel to the other paths in the same layer and orthogonal to the paths in the other layer. The middle layer is made of a conductive rubber sheet whose resistance varies with the pressure applied to the walkway.

In the device of WO 87/01574 a large pressure differential is necessary to produce a measurable change. The force on the soles of the feet are significant (the weight of an adult being in the range of about 50 to 150 kilos). The walkway cannot recognise the very small pressure differentials arising, for example, when a finger print is pressed to a surface, between those portions of a sensor surface corresponding to epidermal ridges and valleys of the fingerprint.

The present invention has for its object, the provision of a pressure sensitive digitizer able to sense at high resolution, low differential pressures simultaneously applied at a plurality of points to the digitizer, for example, in identifying or verifying fingerprints.

According to the present invention, there is provided a digitizer comprising a matrix of pressure sensitive cells on an undeformable support, the matrix being defined by a plurality of parallel first conductors and a plurality of parallel second conductors overlying said first conductors, each cell including a cross-over point between one of the first conductors and one of the second conductors, switch means associated with each cross-over point, each switch means including a first contact of one of the first conductors and a second contact, of one of the second conductors wherein said first and second contacts of each cell are separated from one another, each switch means further including resistive means, and the digitizer further including an overlying resiliently deformable surface layer providing, for each cell, a contact bridge for electrically connecting the contacts of the switch means in the response to an applied pressure on the surface layer.

Each resistive means may comprise a thin film resistor connected by one end to one of the first conductors and by a second end thereof to a respective metal pad.

An insulating layer preferably overlies the first conductor and the thin film resistors, the insulating layer having a respective first via in register with each of the pads.

The insulating layer may support the second conductors on its surface and, for each cell of the matrix, a metal contact which extends through the first via into electrical contact with the respective metal pad.

Insulative spacing means on the insulating layer may define, for each cell, a well wherein the metal contact and an adjacent portion of a second conductor are exposed.

The metal contact and the adjacent portion of the second conductor may be of interdigitated form.

In one embodiment, the contact bridges of the resiliently deformable surface layer are supported, each over a respective well, by the insulative spacing means, the surface layer and the contact bridges being sufficiently flexible to permit deformation into each of the wells to bridge between the respective contact and adjacent second conductor.

In a preferred embodiment, the contact bridges are of size such as to be able to bridge between metal contacts and interdigitated adjacent portions of second conductors but of insufficient size to bridge between metal contacts of first cells and second conductors of adjacent cells.

The film is preferably polyethylene terepthalate, such as thickness approximately 3 µm.

Conveniently, each cell, defined by the orthogonal conductors is of side length of the order of 100 µm. The cell density may be such that some 10000 cells are provided per square centimetre.

The digitizer may be fabricated by micro photolithographic techniques used in the manufacture of integrated circuits. Thus, upon a relatively undeformable support, the first conductors and metal pads may be deposited by masking and vacuum deposition or plating and/or by plating or vacuum deposition and, thereafter, masking and etching as necessary. The resistors, for example, Nichrome high stability, low temperature coefficient, resistors are similarly deposited so as to connect each metal pad to its adjacent first conductor. A polyimide or similar insulative material may then be grown or deposited over the first conductors and metal pads with a respective first via being provided to the metal pad. A second metal layer is similarly deposited on the insulative material layer so as to provide the second conductors and, for each cell, a contact pad electrically integral with the respective second conductor and, spaced and electrically isolated therefrom, a contact pad extending through the first via into electrical contact with the metal pad.

A further polyimide or similar insulative material layer may then grown or deposited thereover with, for each cell, a second via exposing at least a part of each of the contact pads of the cell. The via sidewalls may define a well for each cell.

A surface layer, preferably of a material such as Mylar, (Trademark), having a thickness which may be of the order of 3 µm and bearing on its confronting surface, in a first embodiment, for each cell, a respective contact bridge, may then be located thereover with each contact bridge in register with a respective one of the wells.

In a second embodiment, the surface layer has a pattern of contact bridges each of size sufficient to bridge between a metal contact and its adjacent portion of a second conductor but of insufficient size to bridge between a metal contact and a second conductor of an adjacent cell. The pattern has a high density of such contact bridges and may overlay the cells without any requirement for registration.

The surface layer has the properties of resilient deformability and is very flexible so as to be able to conform, upon the application of low differential pressures to high resolution features such as the patterns of a fingerprint.

The invention will be described further, by way of example, with reference to the accompanying drawings in which:-
Figs. 1a and 1b are diagrammatic representations a digitizer having a matrix of 64 cells, and of an individual cell;
Fig. 2 is a diagrammatic computer representation of a switch closure pattern with theoretically optimum parameters;
Figs. 3 to 6 are similar representations with more practical parameters applied;
Fig. 7 is a view, similar to Fig. 2 of a different switch closure pattern;
Figs. 8, 9 and 10 are representations, similar to Fig. 7, to which more practical parameters have been applied;
Fig. 11 is a table illustrating practical results obtainable using a hard-wired breadboard 4 x 4 matrix;
Fig. 12 is a table, similar to that of Fig. 11, listing results obtained using a hard-wired breadboard 8 x 8 matrix;
Figs. 13a and 13b are circuit diagrams of alternative sensors usable with the digitizer of the present invention;
Figs. 14 and 15 are diagrammatic representations of a single cell of a digitizer according to a first embodiment of the present invention; and
Figs. 16, 17 and 18 are diagrammatic representations of preferred contact arrangements of cells of a digitizer according to the present invention.

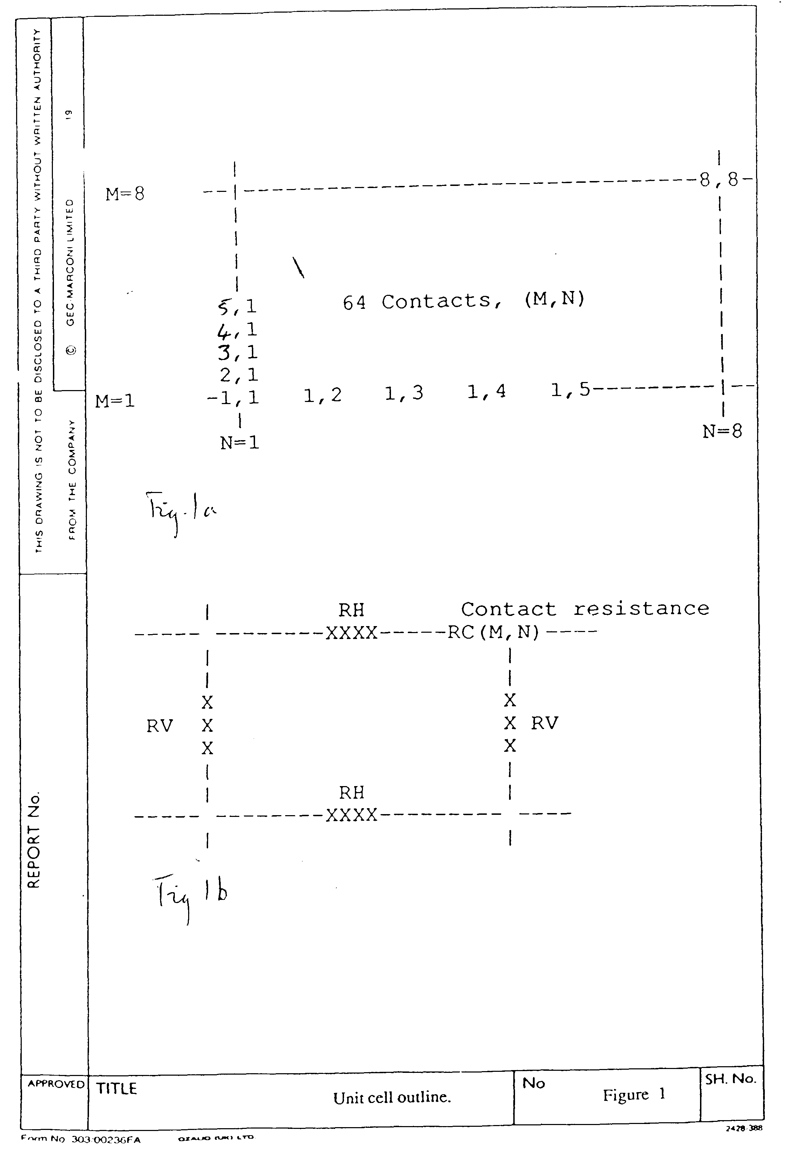

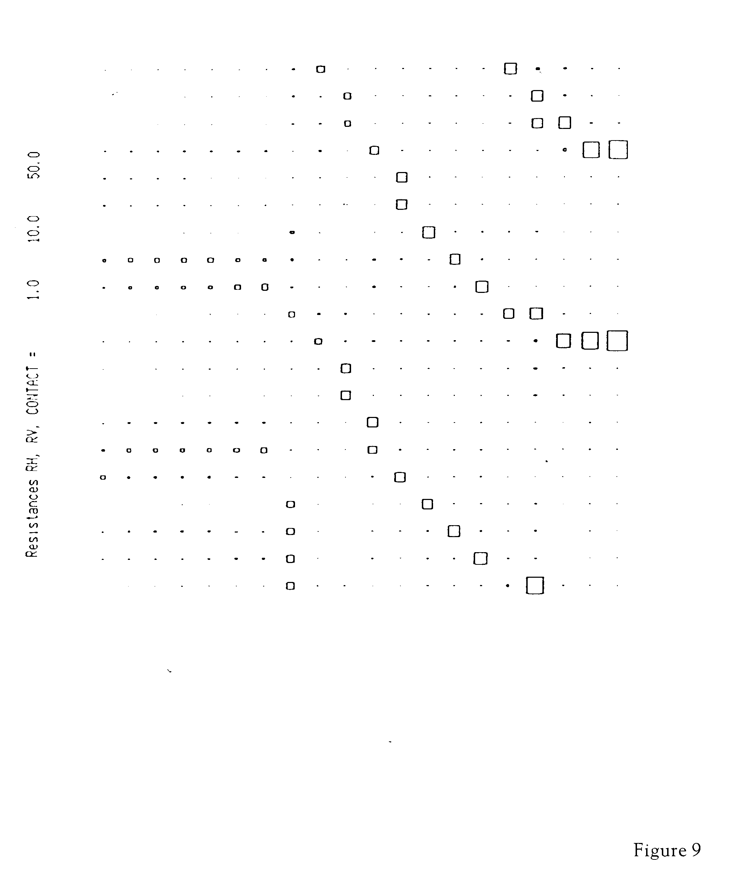

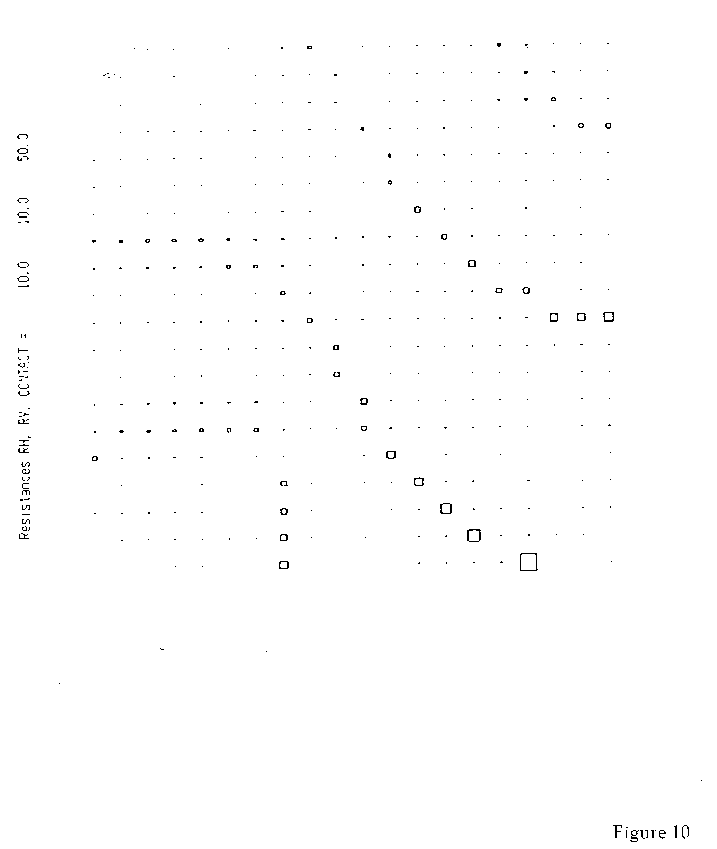

Referring firstly to Figs. 1 to 10, various computer models were set up and examined to determine the feasibility of detecting fingerprint patterns. Fig. 1 shows, diagrammatically a matrix defined by 8 rows M and 8 columns N of conductors. A total of 64 cross-over points therefore exist. For each cell (Fig. 1b), a row resistance RH, a column resistance RV and a contact resistance RC exist when a contact is made.

In the matrix of Fig. 1a, if all the contacts are closed, the contact M₁, N₁, provides a total resistance of RV + RH + RC ohms. The contacts M₈, N₈, provides a total resistance of 9RV + 9RH + RC ohms. This is on the assumption that all the column electrodes are grounded at their lower ends and a voltage is applied to the left end of each row electrode. A possible total of 57 loops and, therefore, 57 relationships exists. These 57 linear equations may be solved by matrix inversion if the e.m.f. around each loop is equated to zero or unity.

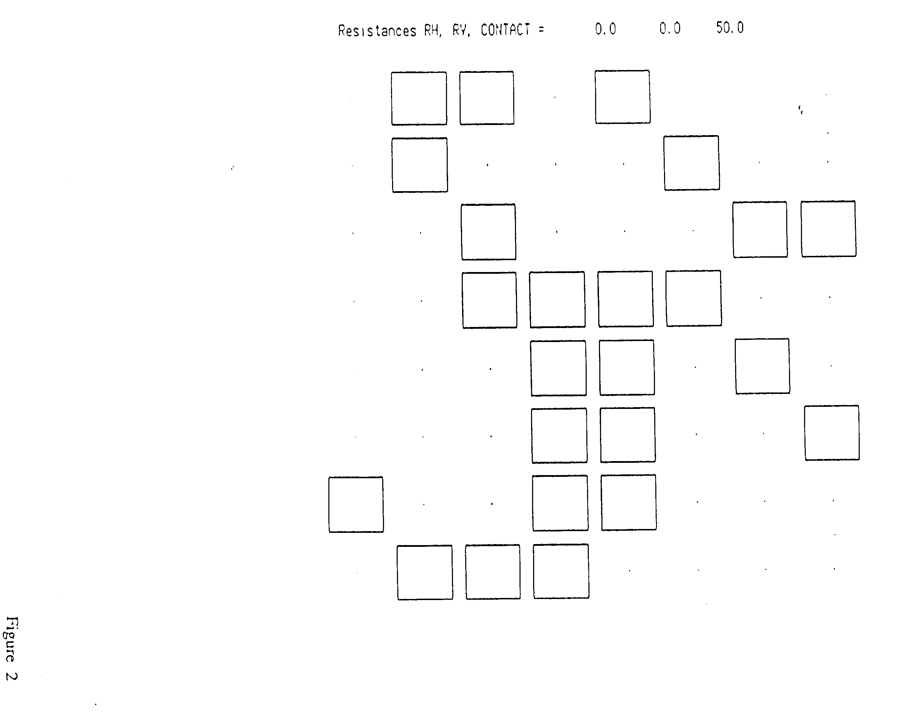

Open contacts (infinite resistance) cannot be managed by the computer. A finite value of 100M ohms is assigned to the contact resistors of any open contact. Outputs from the computer form the illustrations of Figs. 2 to 10. In these illustrations, the current due to contact closure is represented by the side length of the square depicting that contact. Further, the representations have been normalised in that each maximum current square in the various figures is of equal sidelength.

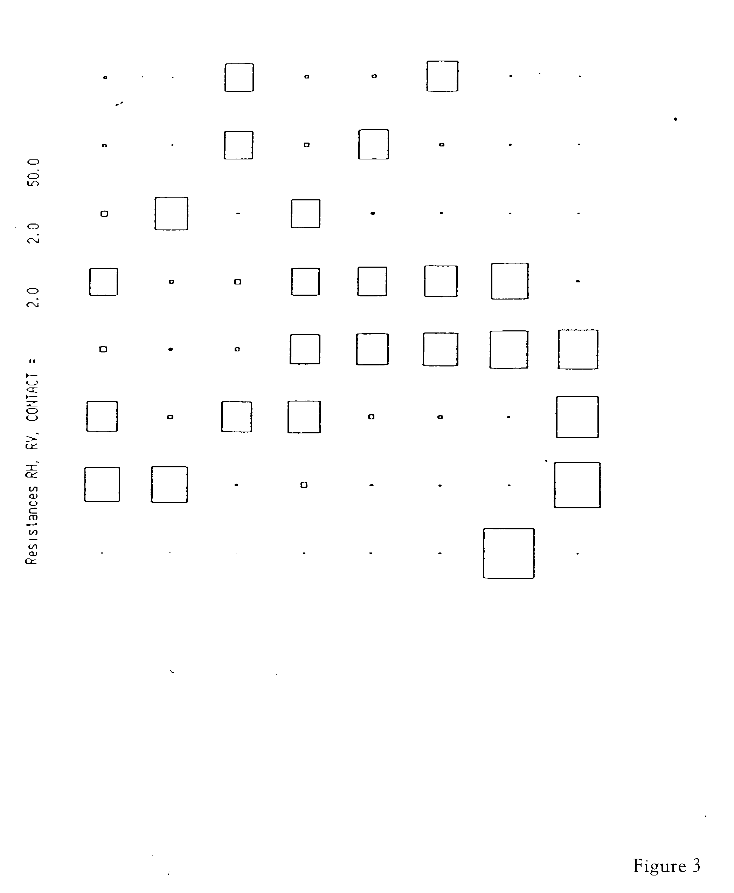

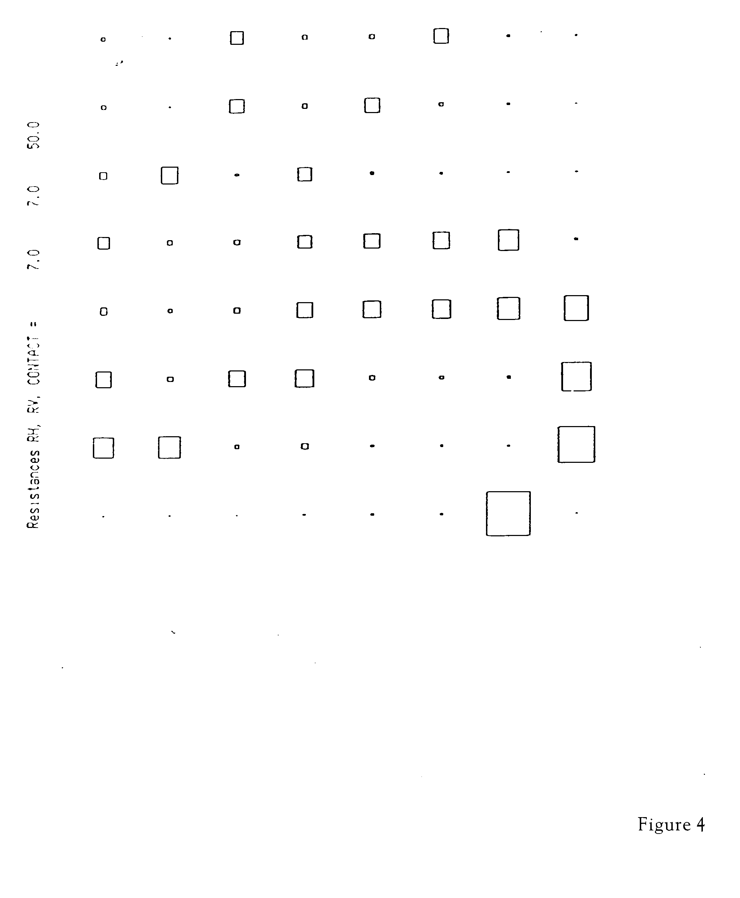

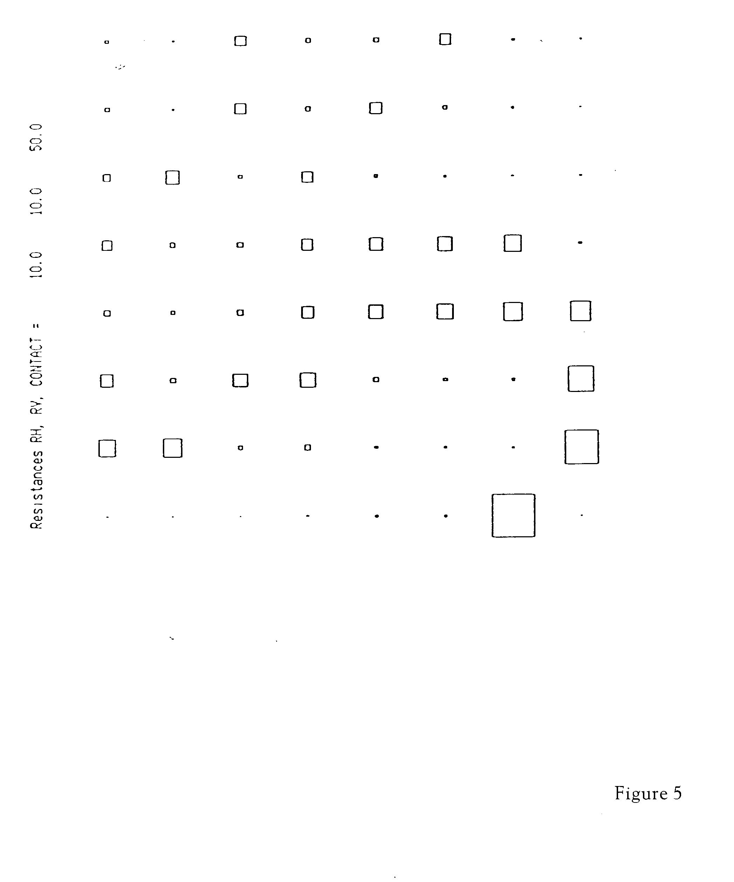

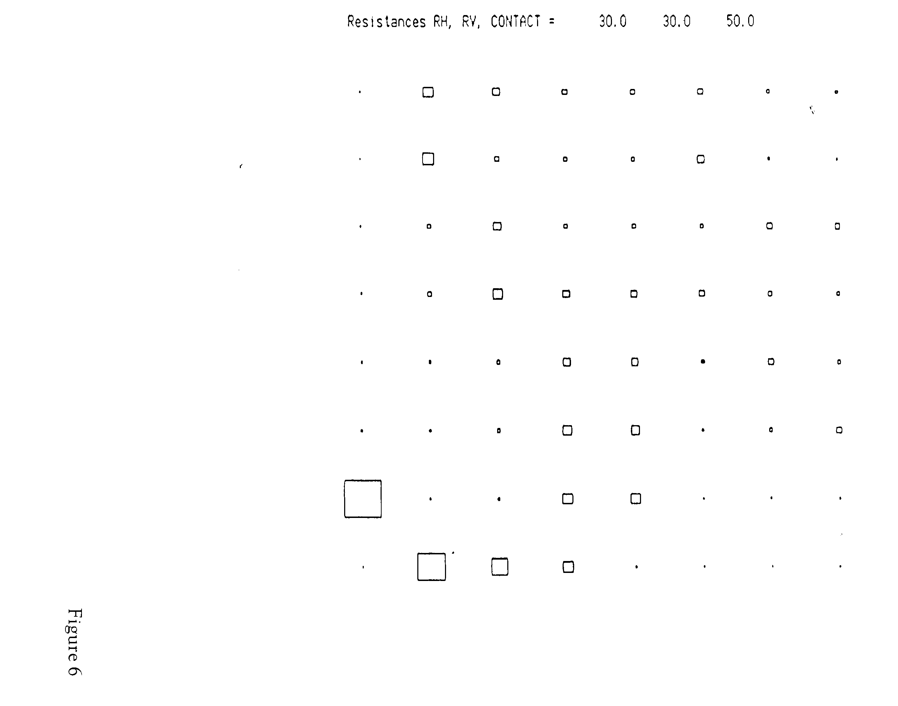

Fig.2 illustrates a first "sensed" pattern in which neither column nor row electrodes have any resistance value. The open contacts of the matrix are denoted as dots. Fig. 2 is purely theoretical in that the row and column electrodes have (certainly in microcircuitry) finite resistances. Fig. 3 is illustrative of the computer output when resistance values of 2 ohms are given to the electrodes/unit cell size. Figs. 4 and 5 illustrate the results when RH and RV are increased to 7 ohms and 10 ohms respectively. In each case, the pattern is distinguishable. Only when the values of RH and RV approach that of RC (as shown in Fig. 6) is the pattern not correctly discernable.

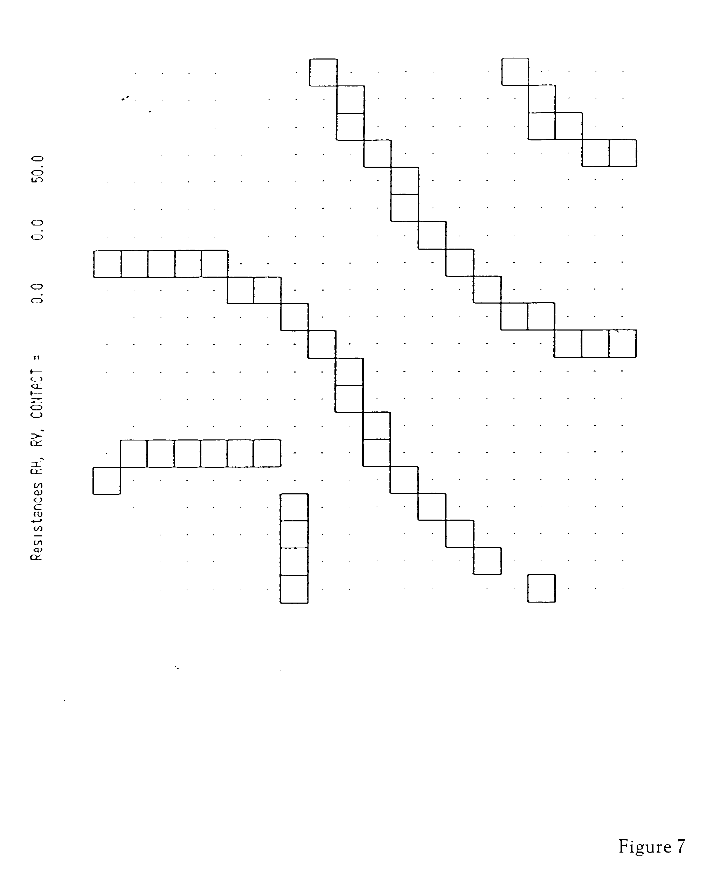

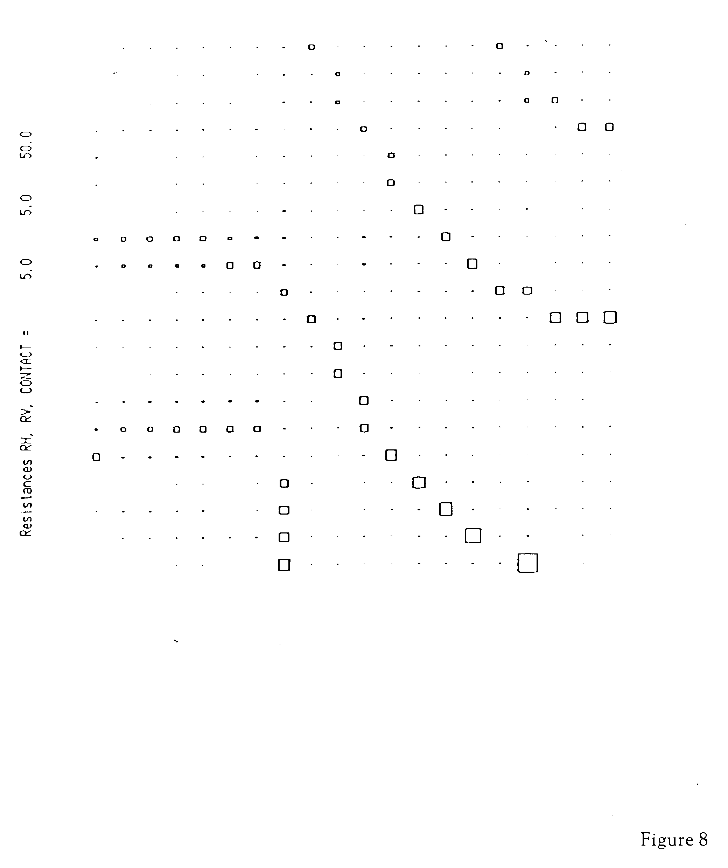

Fig. 7 illustrates a different pattern modelled by the computer on a 20 x 20 matrix with zero resistance of the column and row electrodes. As shown by Figs. 8, 9 and 10, the pattern is still discernable when the more practical values of 5,5; 1,10; up to 10,10 ohms are fed into the computer as values for RH and RV respectively.

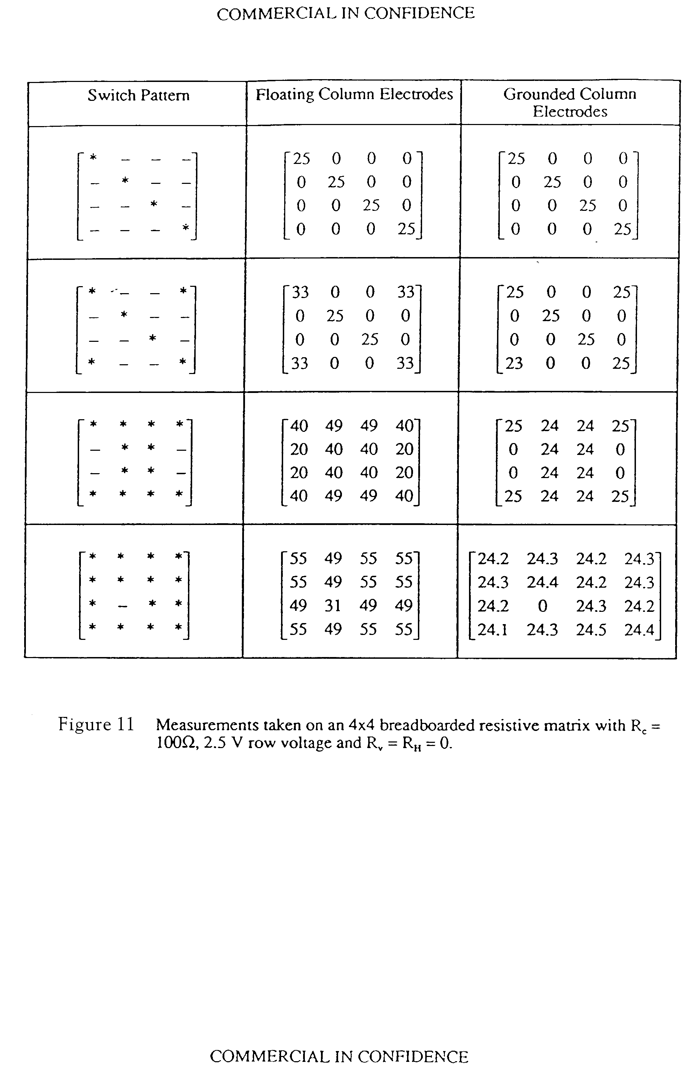

Fig. 11 shows actual measured values when a breadboarded 4 x 4 matrix had contacts of 100 ohms resistance closed as shown in the respective pattern diagram. Discernability of pattern is still possible with floating column electrodes even when all but one of the contacts are closed. If the column electrodes are grounded, the discernment is complete but this is due to the zero (or near zero) resistance of the breadboarded electrodes. In this instance, RC was 100 ohms and a 2.5 V row voltage was used.

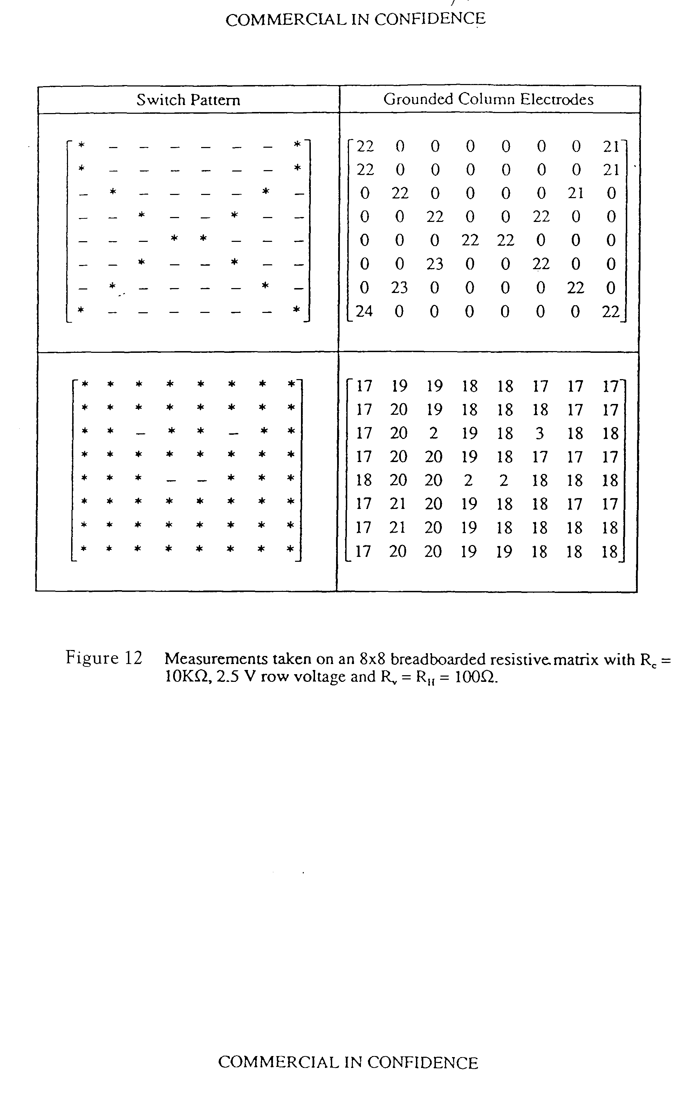

Fig. 12 is similar to Fig. 11 in showing actual measured values on an 8 x 8 breadboarded matrix. In this case finite values (100 ohms) were given to RV and RH and the contact resistance RC was through a 10K resistor. The pattern is shown. The column electrodes were grounded.

From the computer modelling and from the breadboard results, it is clear that greatest discernability exists if the contact closure resistance is made high relative to the electrode resistance. Preferably RC> 10 x RV and 10 x RH. Further, the electrode resistance will limit the matrix size as it is inversely proportional thereto. The electrode resistance will also be inversely proportional to the maximum closure density.

The row electrode may be driven by a set of voltages having a binary relationship. Using high contact resistances and low electrode resistances, the output current values would then be directly indicative of the closure pattern. Alternatively, if only one row electrode at one time is driven and the remainder are grounded, parasite row electrode potentials would be reduced and resistance limitations would then be eased. The hardware implementation of such an arrangement is also straight forward to implement.

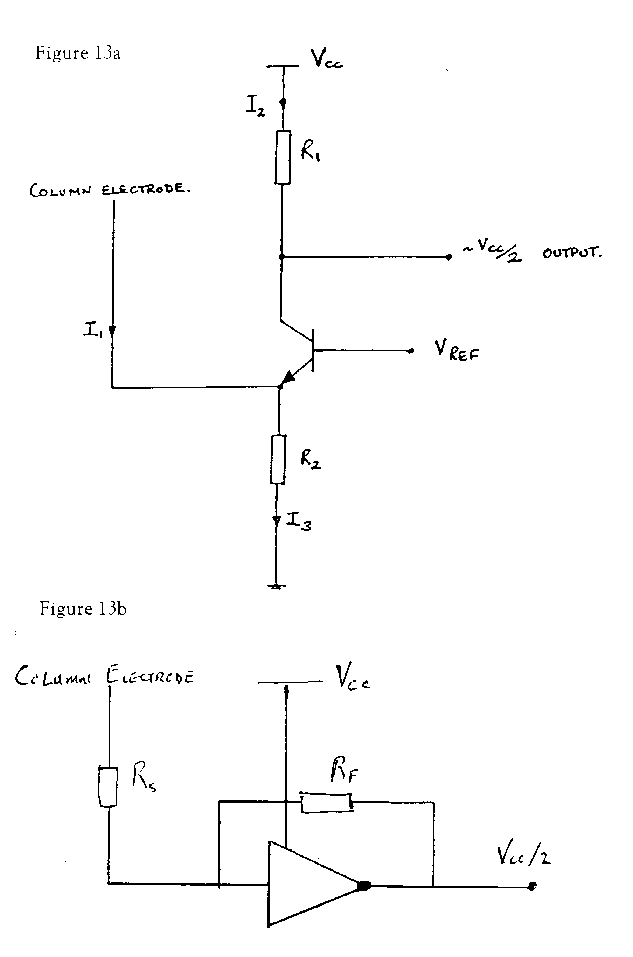

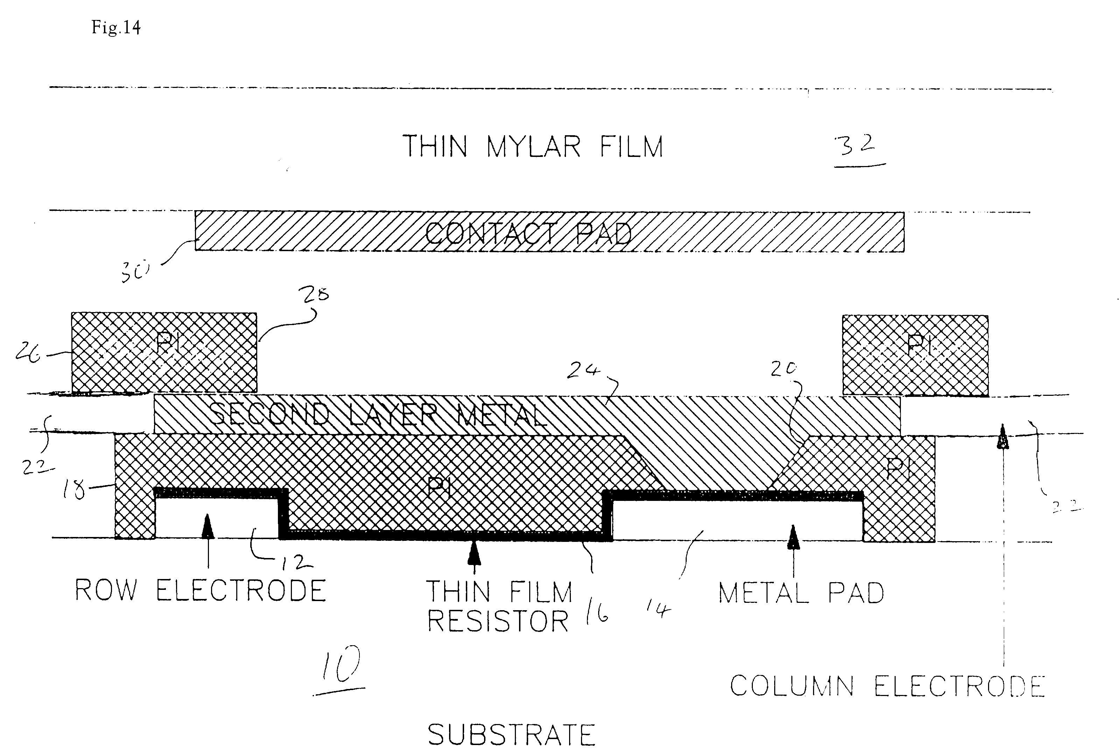

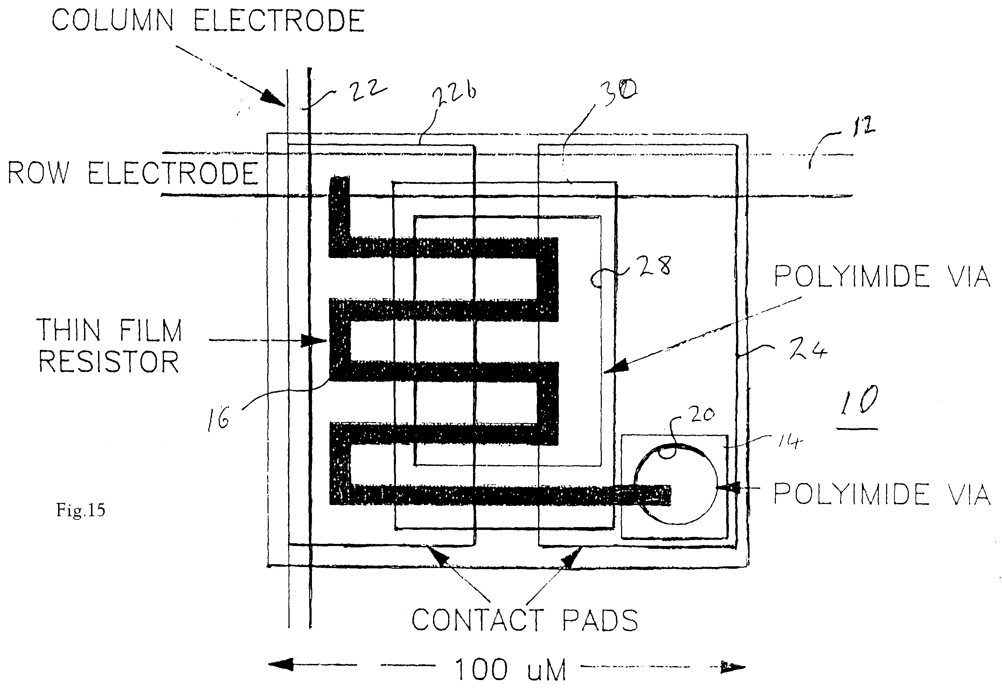

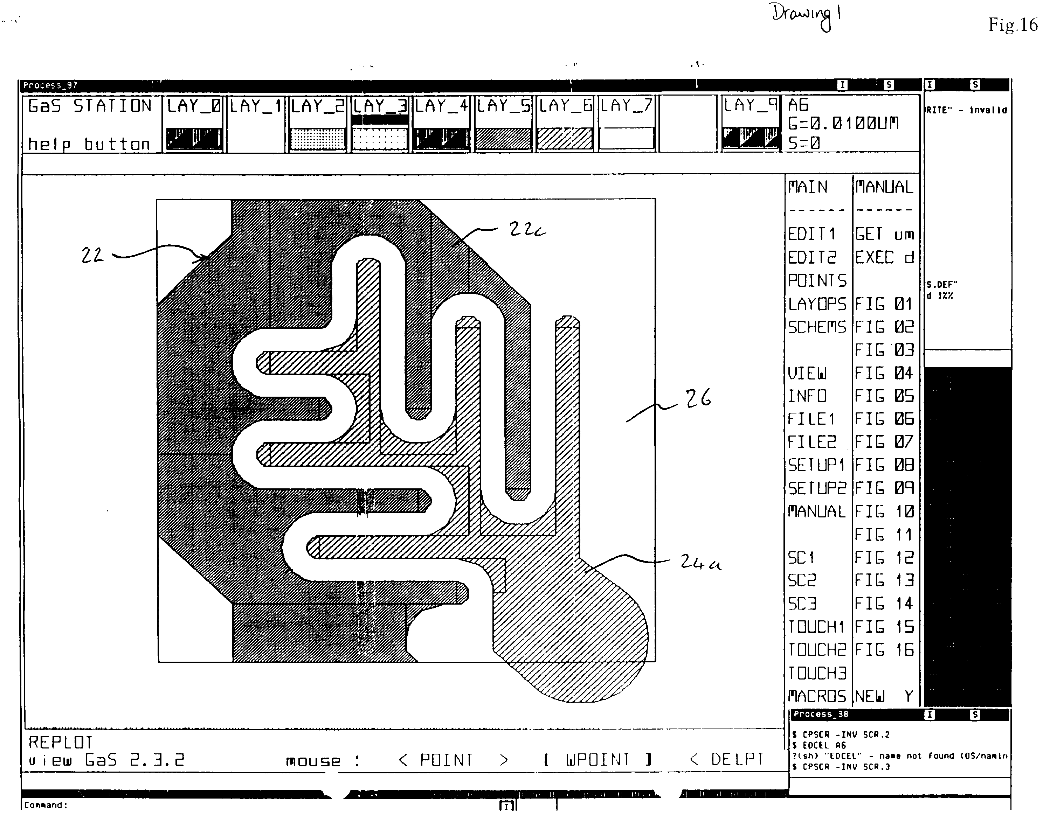

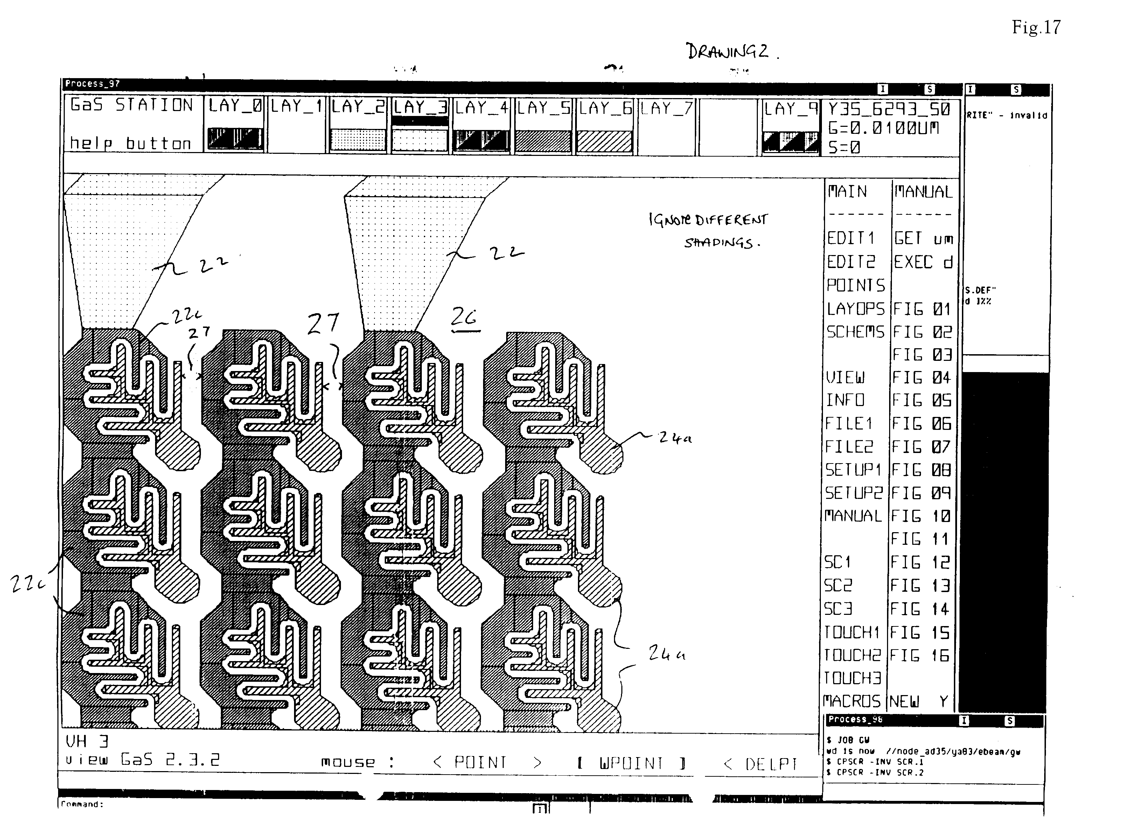

In a digitizer according to the invention, it is necessary to provide current sensing means for each column electrode N. Such current sensing means may be formed by the circuit shown in Fig. 13a. Input from the column electrode is to the emitter of a transistor connected between a rail voltage Vcc and ground by a divider circuit including resistors R1 and R2 and the collector emitter circuit of the transistor. A constant voltage is applied to the base of the transistor and variations in the collector voltage provide an output indicative of current flow.

Alternatively, the circuit shown in Fig. 13b may be used. Here, each column is connected to an inverter gate of, for example, a 4069 UBP CMOS integrated circuit. The column voltage is normally greater than V_{CC} eg V_{CC} ≥ 3 volts and column voltage ≤ 6 volts. Contact at a cell is indicated when a preset output voltage V_{DD} changes to a value V_{CC} > V_{DD}/2 > V_{CC}/2.

In order to provide for high resolution, the digitizer may be formed using techniques applicable in the manufacture of integrated circuits. Thus, the cells and the associated electronics could be formed on a single chip of silicon.

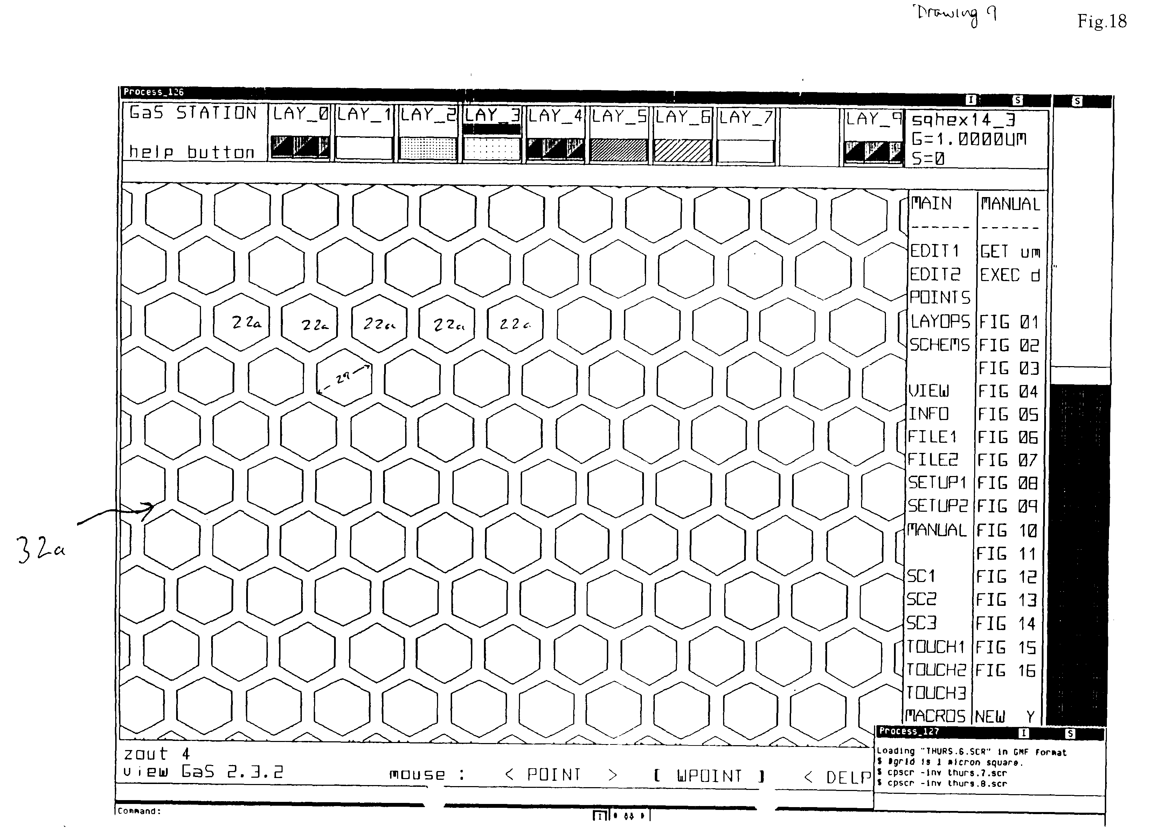

As shown in Figs. 14 and 15, a substantially non-deformable insulating substrate 10 which may be of plastics, glass, silicon or other suitable insulant, is masked and coated eg by plating or vacuum deposition, with metal to form a plurality of parallel row electrodes 12 spaced at, for example, 100 µm intervals. a plurality of metal pads 14 are simultaneously formed on the substrate 12 at intervals corresponding to the proposed cell density of the matrix. The width and thickness of the deposited metal electrodes 12 determines the value RV and is chosen to be as low as is practical. Thin film resistors 16 of Nichrome or a similar stable material of low temperature coefficient are deposited on the substrate 10 with one end of each resistor 16 connected to a respective pad 14 and the other end connected to an adjacent row electrode 12. The resistor pattern, determined by the desired resistance, is shown in Fig. 15.

A layer 18 of an insulant such as polyimide is deposited on top of the row electrodes 12 and the resistors 16 but first vias 20 are provide in the layer 18 over each pad 14.

A second deposition of metal is then effected on the layer 18 to provide parallel column electrodes 22, orthogonal to the row electrodes 12 and at 100 µm intervals. The metal defines not only the electrodes 22 but also contact pads 22b one for each cell, electrically integral with the column electrodes 22, and also provides electrically separate contact pads 24 which extend through the first vias 20 into electrical contact with respective pads 14. A further layer 26 of insulant defines a well or second via 28. The insulated layer 26, which is preferably polyimide, serves to space a flexible resiliently deformable film 32 from the contact pads 22b and 24.

The film 32 is of a material such as MYLAR (Trademark) and, at a thickness of 3 µm, has the necessary properties of strength and deformability. On its surface confronting the matrix, the film 32 has a plurality of bridge contacts 20, one for each cell and in register over the via 28 formed in the layer 26.

A preferred form of contact arrangements which does not require registration of the overlying sheet 32 is shown in Figs. 16, 17 and 18. As shown, in this embodiment, the column electrodes 22 provide contact pads 22c interdigitated with contact pads 24a (corresponding to the contact pads 24 of Figs. 14 and 15). The interdigitation spacing 25 is arranged to be much less than the spacing 27 between columns of cells. A film 32a (corresponding to the film 32) has a pattern of bridge contacts 22a each of maximum dimension 29 less than the spacing 27. In this way, contact may be made between interdigitated contact pads 22c and 24a but not to adjacent columns.

Application of relatively low pressure differentials to the outer surface of the film 32 or 32a causes deformation thereof at the applied pressure areas into the wells 28 causing the respective contact bridges 30 or 22a to make electrical contact between the contact pad 22b and the contact pad 24 or between the contact pads 22c and the contact pads 24a in the well.

In a practical embodiment, a fingerprint verifier would comprise a matrix of, for example, 12.5mm square having a cell density as described above. The verifier matrix would be provided in the floor of an aperture or with a peripheral wall so as correctly to locate a fingertip relative to the matrix for sensing of the fingerprint pattern.

A ROM or like memory device may be provided with a series of look-up tables to provide a pattern output dependent upon the currents sensed. Correlation and comparison means are provided for correlating and thus comparing the sensed pattern with a pattern read from a credit card or other storage means in order to verify the fingerprint and hence the confirm or otherwise the identity of a person.

The invention is not confined to the precise details of the foregoing example and variation may be made thereto. For instance, the invention is applicable to digitizers, other than fingerprint verifiers, in which the requirement is for high resolution of low pressure differentials.

If necessary, the surface of the film 32 or 32a may be toughened using Silicon Nitride.

Other resistors than those formed of Nichrome may be used. Similar insulants other then polyimide may provide the insulating layers 18 and 26.

The suggested cell density of 10,000/cm² may be varied as required.

Other variations are possible within the scope of the claims.

## Claims

1. A digitizer comprising a matrix of pressure sensitive cells on an undeformable support (10), the matrix being defined by a plurality of parallel first conductors (12) and a plurality of parallel second conductors (22) overlying the first conductors, each cell including a cross-over point between one of the first conductors and one of the second conductors, switch means associated with each cross-over point, each switch means including a first contact (24,24a) of one of the first conductors and a second contact (22b,c) of one of the second conductors wherein said first and second contacts of each cell are separated from one another, each switch means further including resistive means (16), and the digitizer further including an overlying resiliently deformable surface layer (32,32a) providing, for each cell, a contact bridge (22a,30) for electrically connecting said contacts of the switch means in response to an applied pressure on the surface layer.

2. A digitizer as claimed in claim 1 wherein each resistive means comprises a thin film resistor (16) connected by one end to an adjacent one of the first conductors (12) and by a second end to a respective metal pad (14).

3. A digitizer as claimed in claim 2 including an insulative layer (18) overlying the first conductors (12) and the resistors (16), and having respective first vias (20) for each metal pad (14).

4. A digitizer as claimed in claim 3 wherein the second conductors (22) are supported upon the insulative layer (18), the second contacts (22b,c) are formed by metal contact pads connected to the second conductors (22), and the first contacts (24,24a) are formed by metal contact pads each of which is connected to a respective one of the metal pads (14) connected to the respective thin film resistors (16), and wherein the first and second contact pads are supported by the insulative layer (18).

5. A digitizer as claimed in claim 4 wherein the first metal contact pads and the second metal contact pads are interdigitated.

6. A digitizer as claimed in claim 4 or 5 wherein the contact bridges (22a,30) are of dimension greater than the first and second contact pad spacing but less than the intercell spacing.

7. A digitizer as claimed in claim 4, 5 or 6 including a further insulating layer (26) covering the second conductors but having, for each cell, a respective second via (28) in the form of a well (28) at the bottom of which are exposed at least part of the contact pads of the cell.

8. A digitizer as claimed in claim 1 wherein the surface layer is a resiliently deformable film.

9. A digitizer as claimed in claims 7 and 8 wherein the resiliently deformable film overlies the matrix with the bridge contacts (22a,30) thereof over the cell wells whereby deformation of the film, by the application of pressure causes one or more of the bridge contacts to electrically bridge the contact pads to operate the switch means.

10. A digitizer as claimed in any preceding claim wherein the resiliently deformable film is of polyethylene terepthalate and has a thickness of the order of 3 µm.

11. A digitizer as claimed in any preceding claim wherein the matrix has a cell density of 10000 cells/cm².

12. A digitizer according to any preceding claim wherein the resistance of the switch resistive means is at least ten times the resistance per cell length of the first conductors and of the second conductors.

13. A fingerprint verifier comprising a digitizer as claimed in any preceding claim including means for comparing a detected pattern of applied pressure with a known pattern.

14. A verifier as claimed in claim 13 including a wall peripheral to the matrix to locate a fingertip on the matrix.

## Patentansprüche

1. Digitalisierer mit einer Matrix aus druckempfindlichen Zellen auf einer nichtverformbaren Unterlage (10), wobei die Matrix durch eine Mehrzahl paralleler erster Leiter (12) und eine Mehrzahl paralleler zweiter Leiter (22), welche die ersten Leiter überlappen, gebildet ist und jede Zelle einen Kreuzungspunkt zwischen einem der ersten Leiter und einem der zweiten Leiter aufweist, weiter mit einem jedem Kreuzungspunkt zugeordneten Schaltorgan, das einen ersten Kontakt (24, 24a) an einem der ersten Leiter und einen zweiten Kontakt (22b, c) an einem der zweiten Leiter aufweist, wobei der erste und der zweite Kontakt jeder Zelle voneinander getrennt sind und jedes Schaltorgan außerdem ein Widerstandsorgan (16) aufweist, und wobei der Digitalisierer ferner eine überlappende, elastisch verformbare Flächenschicht (32, 32a) aufweist, die für jede Zelle eine Kontaktbrücke (22a, 30) zur elektrischen Verbindung der genannten Kontakte des Schaltorgans bei Ausübung eines Drucks auf die Flächenschicht herstellt.

2. Digitalisierer nach Anspruch 1, wobei jedes Widerstandsorgan einen Dünnfilmwiderstand (16) aufweist, der mit einem Ende mit dem benachbarten ersten Leiter (12) und mit dem zweiten Ende mit einem betreffenden Metallplättchen (14) verbunden ist.

3. Digitalisierer nach Anspruch 2, mit einer Isolierschicht (18), welche die ersten Leiter (12) und die Widerstände (16) überdeckt und für jedes Metallplättchen (14) jeweils eine Durchbrechnung (20) aufweist.

4. Digitalisierer nach Anspruch 3, wobei die zweiten Leiter (22) auf der Isolierschicht (18) liegen und die zweiten Kontakte (22b, c) durch metallene Kontaktplättchen gebildet sind, die mit den zweiten Leitern (22) verbunden sind, und die ersten Kontakte (24, 24a) durch metallene Kontaktplättchen gebildet sind, die jeweils mit dem betreffenden der mit den Dünnfilmwiderständen (16) verbundenen Metallplättchen (14) verbunden sind, und wobei die ersten und die zweiten Kontaktplättchen auf der Isolierschicht (18) abgeschützt sind.

5. Digitalisierer nach Anspruch 4, wobei die ersten metallenen Kontaktplättchen und die zweiten metallenen Kontaktplätttchen ineinandergreifend angeordnet sind.

6. Digitalisierer nach Anspruch 4 oder 5, wobei die Kontaktbrücken (22a, 30) eine größere Abmessung haben als der Abstand zwischen den ersten und den zweiten Kontaktplättchen, aber kleiner als der Abstand zwischen den Zellen sind.

7. Digitalisierer nach Anspruch 4, 5 oder 6, mit einer weiteren Isolierschicht (26) welche die zweiten Leiter überdeckt, aber für jede Zelle eine zweite Durchbrechung (28) in Form einer Mulde (28) aufweist, an deren Boden die Kontaktplättchen der Zelle mindestens teilweise freiliegen.

8. Digitalisierer nach Anspruch 1, wobei die Flächenschicht ein elastisch verformbarer Film ist.

9. Digitalisierer nach den Ansprüchen 7 und 8, wobei der elastisch verformbare Film die Matrix mit deren Kontaktbrücken (22a, 30) über den Zellenmulden überdeckt, so daß eine Verformung des Films durch Druckanwendung bewirkt, daß eine oder mehrere der Kontaktbrücken die Kontaktblättchen elektrisch überbrücken und das Schaltorgan betätigen.

10. Digitalisierer nach einem der vorhergehenden Ansprüche, wobei der elastisch verformbare Film aus Polyethylen-Terephtalat besteht und eine Dicke im Bereich von 3 µm hat.

11. Digitalisierer nach einem der vorhergehenden Ansprüche, wobei die Matrix eine Zellendichte von 10.000 Zellen pro cm² hat.

12. Digitalisierer nach einem der vorhergehenden Ansprüche, wobei der Widerstand des Schaltwiderstandsorgans mindestens das 10-fache des Widerstands der ersten Leiter und der zweiten Leiter pro Zellenlänge beträgt.

13. Fingerabdruck-Verrifizierer mit einem Digitalisierer nach einem der vorhergehenden Ansprüche, der Mittel zum Vergleich eines abgetasteten Druckmusters mit einem bekannten Muster aufweist.

14. Verrifizierer nach Anspruch 13, der eine am Umfang der Matrix verlaufende Wand zur Positionierung einer Fingerspitze auf der Matrix aufweist.

## Revendications

1. Convertisseur numérique comprenant une matrice de cellules sensible à la pression sur un support indéformable (10), la matrice étant définie par une pluralité de premiers conducteurs parallèles (12) et une pluralité de seconds conducteurs parallèles (22) recouvrant les premiers conducteurs, chaque cellule comprenant un point d'intersection entre un des premiers conducteurs et un des seconds conducteurs, un moyen de commutation associé à chaque point d'intersection, chaque moyen de commutation comprenant un premier contact (24, 24a) d'un des premiers conducteurs et un second contact (22b, c) d'un des seconds conducteurs où lesdits premier et second contacts de chaque cellule sont séparés l'un de l'autre, chaque moyen de commutation comprenant en outre un moyen résistif (16), et le convertisseur numérique comprenant en outre une couche de surface déformable de façon élastique de recouvrement (32, 32a) fournissant, pour chaque cellule, un pont de contact (22a, 30) pour connecter électriquement lesdits contacts du moyen de commutation en réponse à une pression appliquée sur la couche de surface.

2. Convertisseur numérique selon la revendication 1 dans lequel chaque moyen résistif comprend une résistance à couche mince (16) connectée par une extrémité à une extrémité adjacente des premiers conducteurs (12) et par une seconde extrémité à une plage de métal respective (14).

3. Convertisseur numérique selon la revendication 2 comprenant une couche isolante (18) recouvrant les premiers conducteurs (12) et la résistance (16), et ayant des premières traversées respectives (20) pour chaque plage de métal (14).

4. Convertisseur numérique selon la revendication 3 dans lequel les seconds conducteurs (22) sont supportés sur la couche isolante (18), les seconds contacts (22b, c) sont formés par des plages de contact de métal connectées aux seconds conducteurs (22), et les premiers contacts (24, 24a) sont formés par des plages de contact de métal dont chacune est connectée à une des plages de métal respectives (14) connectées aux résistances en couche mince respectives (16), et où les première et seconde plages de contact sont supportées par la couche isolante (18).

5. Convertisseur numérique selon la revendication 4 dans lequel les premières plages de contact de métal et les secondes plages de contact de métal sont interdigitées.

6. Convertisseur numérique selon la revendication 4 ou 5 dans lequel les ponts de contact (22a, 30) sont de dimension plus grande que l'espacement de plage des premier et second contacts mais plus petite que l'espacement intercellule.

7. Convertisseur numérique selon la revendication 4, 5 ou 6 comprenant une autre couche isolante (26) couvrant les seconds conducteurs mais ayant pour chaque cellule, une seconde traversée respective (28) sous la forme d'un caisson (28) au fond duquel sont exposées au moins une partie des plages de contact de la cellule.

8. Convertisseur numérique selon la revendication 1 dans lequel la couche de surface est une couche déformable de façon élastique.

9. Convertisseur numérique selon les revendications 7 et 8 dans lequel la couche déformable de façon élastique recouvre la matrice avec les contacts de pont (22a, 30) de celle-ci sur les caissons de cellule de sorte que la déformation de la couche, par l'application de pression provoque la liaison électrique d'un ou de plusieurs des contacts de pont aux plages de contact pour faire fonctionner le moyen de commutation.

10. Convertisseur numérique selon l'une quelconque des revendications précédentes dans lequel la couche déformable de façon élastique est en téréphtalate de polyéthylène et a une épaisseur de l'ordre de 3 µm.

11. Convertisseur numérique selon l'une quelconque des revendications précédentes dans lequel la matrice a une densité de cellule de 10 000 cellules/cm².

12. Convertisseur numérique selon l'une quelconque des revendications précédentes dans lequel la résistance du moyen résistif de commutation est au moins dix fois la résistance par longueur de cellule des premiers conducteurs et des seconds conducteurs.

13. Vérificateur d'empreintes digitales comprenant un convertisseur numérique selon l'une quelconque des revendications précédentes comprenant un moyen pour comparer un modèle détecté de pression appliquée à un modèle connu.

14. Vérificateur selon la revendication 13 comprenant une paroi périphérique à la matrice pour placer un bout de doigt sur la matrice.
